# EUROPÄISCHE PATENTSCHRIFT

(11) **EP 0 426 147 B1**
(45) Veröffentlichungstag und Bekanntmachung des Hinweises auf die Patenterteilung: **24.01.1996**
(21) Anmeldenummer: 90120891.8
(22) Anmeldetag: 31.10.1990
(51) Int. Cl.: F16L 9/08, F16L 13/12, F16L 58/10, F16L 58/18

(54) **Rohr aus Beton mit einer korrosionsfesten Innenauskleidung mit passgerechten Rohrverbindungsstücken und mit den Rohrendbereichen integrierten Abdichtungsanordnungen**
Concrete pipe having a corrosion resistant inner lining, suitable pipe connection pieces and sealing arrangements integrated into the end pieces of the pipes
Tuyau en béton ayant un revêtement interne anticorrosif à raccords de tuyau adaptés et dispositifs d'étanchéité intégrés dans les zones de raccordement

(30) Priorität: 03.11.1989 DE 3936671
(43) Veröffentlichungstag der Anmeldung: 08.05.1991
(73) Patentinhaber: Fasel, geb. Willwacher, Ulrike, D-56472 Nisterau (DE)
(72) Erfinder: Fasel, Georg, Dipl.-Ing., D-56472 Nisterau (DE)
(74) Vertreter: Laufhütte, Dieter, Dr.-Ing.

(56) Entgegenhaltungen:
- DE-U- 8 132 729
- DE-U- 8 714 664
- DE-U- 8 806 158
- DE-U- 8 913 022

## Beschreibung

Die Erfindung betrifft ein Rohr aus Beton mit einer aus einem Kunststoffrohr bestehenden korrosionsfesten Innenauskleidung.

Es sind sowohl Rohre aus Kunststoff als auch aus Beton gefertigt bekannt. Im ersten Fall werden sie hauptsächlich aus Kunststoff gezogen, während die aus Beton gefertigten in einer an sich bekannten, aufrecht stehenden Form mit einem verschiebbaren Kern hergestellt werden. Diese Rohre, die zum Großteil bei Entwässerungssystemen verwendet werden, unterliegen im Rahmen des Umweltschutzes immer höheren Anforderungen, die den heutigen Bedürfnissen kaum mehr gerecht werden. Dies liegt vor allem daran, daß sie unter immer agressiverem und stark säurehaltigem Abwasser schneller korrodieren und dadurch undicht und zerstört werden. Derartige Korrosionen machen aber einen ständigen Austausch und schließlich eine Nachverlegung neuer Rohre öfter nötiger als dies noch bis vor wenigen Jahren erforderlich war. Um diese Nachteile zu vermeiden, ist auch bereits ein weiteres Betonrohr in Verbindung mit einem Kunststoffrohr bekannt. Da diese Rohre in üblicher Weise wie Betonrohre jeweils mit ihrem einen Spitzende in das nächstfolgende muffenförmig breite Rohrende eingeschoben starr verbunden werden, gehen diese Spitzenden leicht zu Bruch. Außerdem sind diese Rohre infolge ihres starren festen Zusammenbaus mangels genügender Vorkehrungen für temperaturbedingte Ausdehnungsmöglichkeiten der Kunststoffteile zu den Betonteilen und den Betonteilen zu Betonteilen beim zusammenstecken der Rohre spannungsbedingten Reißens der Betonkörper und/oder Bersten der zusammengesteckten Betonrohrenden ausgesetzt, so daß diese Rohrteile aus diesem Grund zerstört, gegen neue Rohre ersetzt werden müssen.

Aus der DE-U-8 132 729 ist ein Rohr aus Beton mit einer aus einem Kunststoffrohr bestehenden korrosionsfesten Innenauskleidung bekannt, dessen eines Ende als Rohrspitz-Endteil und dessen anderes Ende als Rohrmuffen-Endteil zur Aufnahme eines Rohrspitz-Endteils des folgenden Rohres ausgebildet ist, wobei am Rohrspitz-Endteil das Kunststoffrohr um einen Überstand übersteht, wobei zwischen dem stirnseitigen Ende des Rohrmuffen-Endteils und einem in das Rohrinnere einspringenden rundumlaufenden Absatz an der Rohrinnenseite des Kunststoffrohres eine rundumlaufende Ausnutung zur Aufnahme eines elastomeren Dichtungsringes angeordnet ist, wobei der geradeverlaufende, in den Rohrmuffen-Endteil einsteckbare Überstand so lang ist, daß er die umlaufende Ausnutung mit ihrem Dichtungsring überdeckt und wobei das Rohr aus Beton das Kunststoffrohr bis zum einschiebbaren Überstand des Rohrspitz-Endteils überdeckt, wobei der in das Rohrinnere einspringende rundumlaufende Absatz des innenliegenden Kunststoffrohres abgeschrägt ist.

Aus der DE-U-8 806 158 ist ein Rohr aus Beton mit einer korrosionsfesten Innenauskleidung aus Kunststoff bekannt, bei welchem eine verbundfeste Vereinigung zwischen dem Betonmantel und der Kunststoffauskleidung erfolgt. Dies kann aufgrund der unterschiedlichen Wärmeausdehnungskoeffizienten der Materialien im praktischen Einsatz zur spannungsbedingten Zerstörung führen.

Aufgabe der Erfindung ist es, die vorbekannten Betonrohre mit korrosionsfester Innenauskleidung dahingehend zu verbessern, daß die Tendenz zur spannungsbedingten Zerstörung des Rohrverbundes vermindert wird, wobei gleichzeitig sichergestellt sein soll, daß die Rohre fest und dicht miteinander verbunden werden.

Diese Aufgabe wird erfindungsgemäß dadurch gelöst, daß der Überstand des Kunststoffrohres mit seinem stirnseitigen Ende an dem im wesentlichen in der Stärke der Wandung des Rohrüberstandes in das Rohrinnere einspringend rundumlaufenden Absatz abstützbar ist, wobei das stirnseitige Ende und der Absatz in Fließrichtung abgeschrägt sind und wobei zwischen dem Betonrohr und der Kunststoffbeschichtung eine axiale und laterale Bewegungsfreiheit besteht. Das erfindungsgemäße Betonrohr mit der korrosionsfesten Innenauskleidung aus Kunststoff kann auch problemlos mit einem herkömmlichen, bereits bestehenden System z.B. aus Kunststoff oder Beton, Gußeisen, Eternit oder dergleichen fest und dicht verbunden werden.

Die Erfindung ist anhand der Zeichnung, in der ein Ausführungsbeispiel dargestellt ist, näher veranschaulicht.

Es zeigen:
Fig. 1 mehre verlegte Rohre in Teilansicht in schematischer Darstellung im Schnitt,
Fig. 2 eine Teilansicht eines Rohrausschnittes einer Verbindung zweier fertig verlegter Rohre in perspektivischer Darstellung,
Fig. 3 eine Rohrverbindung -zweier Rohre im verkleinerten Maßstab, bei dem ein Beton-Kunststoffrohr mit einem Kunststoffrohrüberstand dargestellt wird,
Fig. 4 eine schematische Darstellung der Verfahrensschritte zur Herstellung eines mit einer Kunststoffauskleidung vershenen Betonrohres mit einseitigem Kunststoffrohr-Überstand.

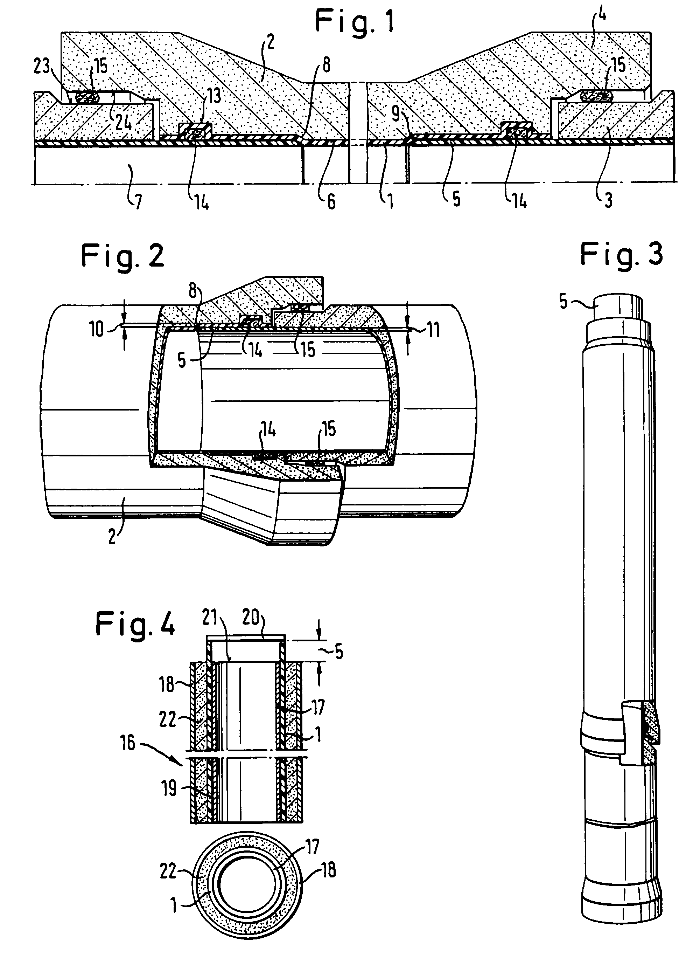

In Fig. 1 ist 1 ein Kunststoffrohr 1 das mit einer Betonummantelung 2 versehen ist, wobei das Kunststoffrohr als eine korrosionsfeste, flüssigkeitsdichte Innenauskleidung des Betonrohres 2 dient, von dem ein Ende ein Rohrspitz-Endteil 3 und das andere Ende als ein Rohrmuffen-Endteil 4 ausgebildet ist, mit welchen Endteilen 3 + 4 die Betonrohre miteinander verbunden sind. Hierbei wird der Rohrspitz-Endteil 3 des einen Rohres in das Rohrmuffen-Endteil des anderen Rohres eingesteckt. Als Justier- und Einsteckhilfe dient hierbei ein Überstand 5 des Kunststoffrohres 1 mit dem dieses am Rohrspitz-Endteil über das Betonrohr 2 bzw. seine Betonummantelung 2 übersteht. Zum einwandfreien Festlegen der miteinander zu verbindenden Rohre ist die Innenwand 6 des Rohrmuffen-Endteils 4 mit einem in das Rohrinnere 7 einspringenden, rundumlaufenden Absatz 8 versehen,auf dem das stirnseitige Ende 9 des Kunststoffrohrüberstandes 5 abstützbar ist. Zweckmäßig sind das stirnseitige Ende 9 und der Absatz 8 in Fließrichtung des im Rohr zu befördernden Abwassers und dergleichen abgeschrägt, um Stauungen der Flüssigkeit bei Schmutzansammlung im Spaltbereich zu vermeiden. Hierbei entspricht die Höhe 10 des Absatzes 8 im wesentlichen der Wandstärke 11 des den Überstand bildenden Kunststoffrohres 1. Des weiteren ist im Rohrmuffen-Endteil 4 des Kunststoffrohres zwischen dem Kunststoffrohr-Muffenende und dem Absatz 8 eine dem Rohrinneren 7 zugewandte rundumlaufende Ausnutung 13 vorgesehen, in der eine ringförmige, vorteilhaft flache Dichtung aus einem natürlichen oder synthetischen flexiblen Material, z.B. Latex, eingebracht werden kann. Die flache Ringform ist deshalb einer rundförmigen zu bevorzugen, da sie fest und unverrutschbar in der, in ihrem Querschnitt vorteilhaft rechteckigen, Nut 13 einsitzen kann. Der gerade in den Rohrmuffen-Endteil einsteckbare Überstand 5 muß hierbei so lang sein, daß er einerseits die umlaufende Ausnutung mit ihrer Dichtung 14 abdeckt und andererseits mit seinem stirnseitigem Ende 9 sich am Absatz 8 abstützen kann, Fig. 2. Es sei noch zu erwähnen, daß die Betonrohrkörper für sich allein zwischen dem Betonrohrspitzen-Endteil 3 außenseitig 23 und dem Betonrohrmuffen-Endteil 4 innenseitig 24 eine rundumlaufende, ringförmige Abdichtung 15 aus flexiblen Material angeordnet haben. Die Kunststoffrohre können als Innenauskleidung in entsprechender Form und Größe in bereits fertige Betonrohre mit entsprechender Innenausbildung relativ zum Kunststoffrohr mit entsprechender Größe in dieses eingeschoben werden. Vorteilhaft wird dieses Verbundrohr nach entsprechender Fertigung des als Kern verwendbaren Kunststoffrohres, den es nunmehr darstellt, mit all seinen Merkmalen - wie vorstehend beschrieben in einer herkömmlichen Rohrformmaschine 16 gefertigt. Zu diesem Zweck wird auf den axial,vertikal verfahrbaren Kern 17 der Rohrformmaschine das mit einem Betonmantel zu versehende Kunststoffrohr 1, mit dem Rohrmuffenendteil 4 nach unten weisend auf denKern konzentrisch zu dessen Hochfahren aufgesetzt. Das Kunststoffrohr muß hierbei so lang sein, daß es den Kern der Rohrmaschine in dessen ausgefahrener Endlage um einen vorbestimmten Überstand 5 überragt. Nach Einfahren des Kerns in die Rohröffnung 19 wird diese mit einer Abdeckung 20 abgedeckt, um vorzubeugen, daß im folgenden Beschichtungsverfahren des Betonrohres mit einem Betongemisch nichts davon in das Rohrinnere gelangt. Im Anschluß daran wird eine Rohrform 18 aus Stahl in Länge des Kerns der Rohrmaschine mit Abstand in gewünschter Stärke des zu formenden Betonrohrkörpers ebenfalls von oben her aufgeschoben und nach Aufschieben die Rohröffnung abgedeckt. In weiterer Folge wird im Zwischenraum zwischen dem aufgeschobenen Kunststoffrohr 1 und der Innenwand der Stahlform 18 von oben her unter gleichzeitigem Einrütteln bis zur Höhe des Kernendes 21 Betonmasse 22 gefüllt. Nach Abtrocknen des Formlings und Ausfahren aus der Formmaschine ist nunmehr ein Betonkunststoffrohr geschaffen, bei dem aus dessen spitzseitigem Rohrende 3 ein Kunststoffrohrendteil ohne Betonummantelung des Kunststoffrohrüberstandes 5 überragt, Fig. 4.

Diese nach vorliegender Erfindung hergestellten Verbundrohre ermöglichen mit nur wenigen Dichtungen 14 und Abdichtungen 15 nicht nur eine sehr gute Abdichtung gegen Flüssigkeitsaustritt sondern durch ihren Überstand 5 an jedem Rohrende auch ein überlappendes unmittelbares Verbinden ohne Zwischenstücke der Beton-Kunststoff-Verbundrohre miteinander. Durch die dabei verwendeten flexiblen Dichtungs- und Abdichtungsmittel 14, 15 ist auch eine große axiale und laterale Bewegungsfreiheit zum Dehnen und Zusammenziehen der Rohre in ihren Verbundbereichen als auch zwischen Betonrohr und Kunststoffbeschichtung gegeben, so daß entsprechende Spannungen durch Temperatureinflüsse beziehungsweise Temperaturschwankungen, die zum Reißen oder gar Zerstören der Rohre führen, dadurch ausgeglichen werden können. Außerdem sind auch die im Rohrzusammenstoß zum Verbinden und Abdichten der Verbindungsstelle erforderlichen Zwischenverbindungsstücke wie z.B. Doppelmuffen-Verbindungsstücke mit ihren für jedes der beiden Rohrenden erforderlichen Dichtungen 14, wie sie bei einem bekannten Beton-Kunststoffverbundrohr gebräuchlich sind, durch die nunmehr mögliche überlappende unmittelbare Rohrverbindung, entbehrlich.

Hier ist noch zu erwähnen, daß dem losen Verbund der beiden Rohre, und zwar des Betonrohres 2 und des Kunststoffrohres 1 durch bloßes Einschieben des Kunststoffrohres in das Betonrohr gegen axiales Verschieben relativ zueinander durch die Ausnutungen 13 auf der Innenfläche des Betonrohres 2 und den darin entsprechenden Eingriffen jeweils eines elastomären Dichtungsringes 14 auf der Oberfläche am Überstand 5 des Kunststoffrohres 1 Genüge getan ist.

## Patentansprüche

1. Rohr aus Beton (2) mit einer aus einem Kunststoffrohr (1) bestehenden korrosionsfesten Innenauskleidung, dessen eines Ende als Rohrspitz-Endteil (3) und dessen anderes Ende als Rohrmuffen-Endteil (4) zur Aufnahme eines Rohrspitz-Endteils (3) des folgenden Rohres ausgebildet ist, wobei am Rohrspitz-Endteil (3) das Kunststoffrohr um einen Überstand (5) übersteht, wobei zwischen dem stirnseitigen Ende des Rohrmuffen-Endteils (4) und einem in das Rohrinnere (7) einspringend rundumlaufenden Absatz (8) an der Rohrinnenseite (7) des Kunststoffrohres (1) eine rundumlaufende Ausnutung (13) zur Aufnahme eines elastomeren Dichtungsringes (14) angeordnet ist, wobei der gerade verlaufende, in den Rohrmuffen-Endteil (4) einsteckbare Überstand (5) so lang ist, daß er die umlaufende Ausnutung (13) mit ihrem Dichtungsring (14) überdeckt und wobei das Rohr aus Beton (2) das Kunststoffrohr (1) bis zum einschiebbaren Überstand (5) des Rohrspitz-Endteils (3) überdeckt, wobei der Überstand (5) des Kunststoffrohres (1) mit seinem stirnseitigen Ende (9) an dem im wesentlichen in der Stärke der Wandung des Rohrüberstandes (5) in das Rohrinnere (7) einspringend rundumlaufenden Absatz (8) abstützbar ist, wobei das stirnseitige Ende (9) und der Absatz (8) in Fließrichtung abgeschrägt sind und wobei zwischen dem Betonrohr (2) und der Kunststoffbeschichtung (1) eine axiale und laterale Bewegungsfreiheit besteht.

2. Rohr nach Anspruch 1, dadurch gekennzeichnet, daß die Betonkörper jeweils zwischen dem Rohrspitz-Endteil (3) außenseitig (23) und dem Betonrohrmuffen-Endteil (4) innenseitig (24) einen rundumlaufenden Dichtungsring (15) aus einem flexiblen Material aufweisen.

## Claims

1. Pipe consisting of concrete (2) and having a corrosion-resistant inner lining comprising a plastic pipe (1), one end of the concrete pipe being designed as a pipe-spigot end part (3) and its other end being designed as a pipe-socket end part (4) for receiving a pipe-spigot end part (3) of the following pipe, the plastic pipe projecting by an overhang (5) at the pipe-spigot end part (3), an encircling groove (13) for receiving an elastomeric sealing ring (14) being arranged on the inner side (7) of the plastic pipe (1) between the end of the pipe-socket end part (4) and a shoulder (8) which juts into the pipe interior (7) all the way around, the rectilinear overhang (5), which can be plugged into the pipe-socket end part (4), being of such a length that it covers over the encircling groove (13) with its sealing ring (14), and the pipe consisting of concrete (2) covering over the plastic pipe (1) as far as the push-in overhang (5) of the pipe-spigot end (3), it being possible for the overhang (5) of the plastic pipe (1) to be supported by its end (9) on the shoulder (8) which juts into the pipe interior (7) all the way around essentially in the thickness of the wall of the pipe overhang (5), the end (9) and the shoulder (8) being bevelled in the flow direction, and axial and lateral freedom of movement being provided between the concrete pipe (2) and the plastic coating (1).

2. Pipe according to Claim 1, characterized in that the concrete elements each exhibit, between the outside (23) of the pipe-spigot end part (3) and the inside (24) of the concrete-pipe-socket end part (4), an encircling sealing ring (15) consisting of a flexible material.

## Revendications

1. Tuyau en béton (2) avec un revêtement intérieur anticorrosif constitué d'un tuyau en matière synthétique (1), dont une extrémité est réalisée sous forme de partie d'extrémité de pointe de tuyau (3) et dont l'autre extrémité est réalisée sous forme de partie d'extrémité de manchon de tuyau (4) pour recevoir une partie d'extrémité de pointe de tuyau (3) du tuyau suivant, à la partie d'extrémité de pointe de tuyau (3), le tuyau en matière synthétique étant en saillie (5), et entre l'extrémité côté frontal de la partie d'extrémité de manchon de tuyau (4) et un gradin s'étendant tout autour (8) s'enclenchant dans l'intérieur (7) du tuyau, il est disposé au côté intérieur (7) du tuyau en matière synthétique (1) une rainure (13) s'étendant tout autour pour recevoir une bague d'étanchéité (14) en élastomère, la saillie rectiligne (5), pouvant être enfoncée dans la partie d'extrémité de manchon de tuyau (4) ayant une longueur telle qu'elle recouvre la rainure s'étendant tout autour (13) avec sa bague d'étanchéité (14), et où le tuyau en béton (2) recouvre le tuyau en matière synthétique (1) jusqu'à la saillie pouvant être enfoncée (5) de la partie d'extrémité de pointe de tuyau (3), la saillie (5) du tuyau en matière synthétique (1) pouvant prendre appui avec son extrémité frontale (9) au gradin (8) s'étendant tout autour s'enclenchant sensiblement suivant l'épaisseur de la paroi de la saillie de tuyau (5) dans l'intérieur de tuyau (7), l'extrémité frontale (9) et le gradin (8) étant chanfreinés dans la direction d'écoulement, et entre le tuyau en béton (2) et le recouvrement en matière synthétique (1) il existe une liberté de mouvement axiale et latérale.

2. Tuyau selon la revendication 1, caractérisé en ce que les corps en béton présentent respectivement entre la partie d'extrémité de pointe de tuyau (3) au côté extérieur (23) et la partie d'extrémité de manchon de tuyau en béton (4) au côté intérieur (24) une bague d'étanchéité (15) s'étendant tout autour en une matière flexible.
